(19) Europäisches Patentamt
European Patent Office
Office européen des brevets

(11) **EP 1 898 583 A1**

(12) **EUROPEAN PATENT APPLICATION**
published in accordance with Art. 153(4) EPC

(43) Date of publication:
**12.03.2008 Bulletin 2008/11**

(51) Int Cl.:
***H04L 27/38*** *(2006.01)*

(21) Application number: **05793135.4**

(22) Date of filing: **11.10.2005**

(86) International application number:
**PCT/JP2005/018695**

(87) International publication number:
**WO 2006/137175 (28.12.2006 Gazette 2006/52)**

(84) Designated Contracting States:
**FR**

(30) Priority: **22.06.2005 JP 2005182208**

(71) Applicant: **Japan Agency for Marine-Earth Science and Technology Yokosuka-shi Kanagawa 237-0061 (JP)**

(72) Inventor: **MIZUNO, Masashi, Japan Agency for Marine-Earth Science and Tech. Kanagawa 237-0061 (JP)**

(74) Representative: **Plaçais, Jean Yves Cabinet Netter, 36, avenue Hoche 75008 Paris (FR)**

(54) **FRAME SYNCHRONIZATION DEVICE AND FRAME SYNCHRONIZATION METHOD**

(57)    An inner product calculation means 2 executes inner product calculation of symbols input from input terminals 1. Results of such inner product calculation are allocated to each of moving average calculation/storage means 4 by a switch means 3 every N cycle. The allocated values are used to calculate moving averages of the allocated values and values before the N cycle in the moving average calculation/storage means 4, and then stored in N storage means (4-1), (4-2), ..., (4-N). The moving averages of inner product values between data symbols are converged to 0 since data are random. However, the moving averages of inner product values between pilot symbols inserted into one signal frame in advance become a predetermined value. By utilizing the above, a comparison determination means 5 refers to each value of the N storage means (4-1), (4-2), ..., (4-N) to detect the pilot symbol.

FIG. 5

## Description

### Technical Field

The present invention relates to a detection of a pilot symbol in a communication system utilizing a multivalued QAM scheme.

### Background Art

In recent years, a communication system utilizing a multivalued QAM (Quadrate Amplitude Modulation) scheme is used in various digital communication environments. In a system performing communication utilizing the multivalued QAM scheme, data is packaged into frames for transmission on the transmission side. However, in a state where frame synchronization cannot be achieved on the reception side, even if error correction technique is used for data recovery, a data error may occur, resulting in a communication disabled state.

As a conventional frame detection method, Patent Document 1 (JP-A-9-83505) discloses a frame detection circuit used in a receiver in a digital signal transmission system, which inserts a pilot symbol periodically between data symbol trains to constitute a transmission frame on the basis of the inserted pilot symbols, and having a means for detecting frame timing using memory circuits the number of which is equal to the number of frame symbols, the frame detection circuit being characterized by including a means for calculating an average value of input information of the frame detection circuit therefrom, and a means for comparing the input information with the calculated information set as a threshold value and making the input information to be supplied to the memory circuit zero when determining that the input information falls below the threshold value.

Further, Patent Document 2 (JP-A-2000-49881) discloses a communication system which transmits a signal frame containing UW (unique word) to a receiver from a transmitter according to a multivalued QAM scheme. The UW is constituted by allocating a symbol value for maximizing an amplitude to plural successive symbols in the signal frame to be transmitted from the transmitter. The receiver includes a memory for holding the received symbol values corresponding to one or more signal frames, a total sum circuit for successively selecting the column of the successive symbols the number of which is equal to the number of the symbols constituting the UW from the arrangement of the symbol values and attaining the total sum of the symbol values of the symbol column, and a detection circuit for outputting the arrangement position of the symbol column whose total sum value obtained by the total sum circuit becomes maximum as a detection timing candidate of the UW.

Patent Document 1: JP-A-9-83505
Patent Document 2: JP-A-2000-49881

### Disclosure of the Invention

### Problems to be Solved by the Invention

In the frame detection apparatus disclosed in the above Patent Documents 1 and 2, a method for calculating a square of the pilot symbol is adopted. However, this method cannot produce a sufficient difference between the pilot symbol and reception symbols other than the pilot symbol, so that a frame detection error may occur in a communication environment in which the S/N ratio is degraded, resulting in deterioration in the BER characteristics of the entire system.

Further, in the detection circuit disclosed in Patent Document 2, in the case where a symbol value is fluctuated due to influence of noise or phasing in the symbols constituting the UW or symbols before and after the UW, an erroneous UW timing is detected, which may result in generation of misssynchronization.

### Means for Solving the Problems

To solve the above problem, according to the present invention as defined in claim 1, there is provided a frame synchronization determination apparatus for a communication system that transmits a signal frame into which a pilot symbol has been inserted from a transmitter to a receiver according to a multivalued QAM scheme characterized in that one signal frame includes N symbols, n (n is a natural number greater than 2) pilot symbols are allocated in the one signal frame including N symbols such that at least one pair of pilot symbols is different from other pairs and that the phase difference between any pair of pilot symbols is not $\pi/2$ in a signal point arrangement, and the receiver comprises: an inner product calculation means for calculating the inner product between input symbols; a moving average calculation/storage means for calculating and storing the moving average of calculation results obtained from the inner product calculation means; N storage means provided in the moving average calculation/storage means; and a comparison/determination means for comparing N values stored in the storage means so as to determine the position of the pilot symbol.

According to the present invention as defined in claim 2, there is provided a frame synchronization determination apparatus for a communication system that transmits a signal frame into which a pilot symbol has been inserted from a transmitter to a receiver according to a multivalued QAM scheme, characterized in that one signal frame includes N symbols, n (n is a natural number greater than 2) pilot symbols are allocated in the one signal frame including N symbols such that at least one pair of pilot symbols is different from other pairs and that the phase difference between any pair of pilot symbols is not $\pi/2$ in a signal point arrangement, and the receiver comprises: a plurality of inner product calculation means for calculating the inner product between input symbols;

an averaging processing means for adding and averaging a plurality of calculation results obtained from the plurality of inner product calculation means; a moving average calculation/storage means for calculating and storing the moving average of results obtained from the averaging processing means; N storage means provided in the moving average calculation/storage means; and a comparison/determination means for comparing N values stored in the storage means so as to determine the position of the pilot symbol.

According to the present invention as defined in claim 3, in the frame synchronization determination apparatus according to claim 1 or claim 2, the pilot symbols are selected such that the calculation result of the inner product between the pilot symbols which is obtained from the inner product calculation means is a negative value.

According to the present invention as defined in claim 4, there is provided a frame synchronization determination apparatus for a communication system that transmits a signal frame into which a pilot symbol has been inserted from a transmitter to a receiver according to a multivalued QAM scheme, characterized in that one signal frame includes N symbols, n (n is a natural number greater than 2) pilot symbols are allocated in the one signal frame including N symbols such that at least one pair of pilot symbols is different from other pairs, and the receiver comprises: a phase change means for phase changing the input symbol; an inner product calculation means for calculating the inner product between the phase changed symbols; a moving average calculation/ storage means for calculating and storing the moving average of calculation results obtained from the inner product calculation means; N storage means provided in the moving average calculation/storage means; and a comparison/determination means for comparing N values stored in the storage means so as to determine the position of the pilot symbol.

According to the present invention as defined in claim 5, there is provided a frame synchronization determination apparatus for a communication system that transmits a signal frame into which a pilot symbol has been inserted from a transmitter to a receiver according to a multivalued QAM scheme, characterized in that one signal frame includes N symbols, n (n is a natural number greater than 2) pilot symbols are allocated in the one signal frame including N symbols such that at least one pair of pilot symbols is different from other pairs, and the receiver comprises: a phase change means for phase changing the input symbol; a plurality of inner product calculation means for calculating the inner product between the phase changed symbols; an averaging processing means for adding and averaging a plurality of calculation results obtained from the plurality of inner product calculation means; a moving average calculation/storage means for calculating and storing the moving average of results obtained from the averaging processing means; N storage means provided in the moving average calculation/storage means; and a comparison/determination means for comparing N values stored in the storage means so as to determine the position of the pilot symbol.

According to the present invention as defined in claim 6, in the frame synchronization determination apparatus according to claim 4 or claim 5, the pilot symbols are selected such that the calculation result of the inner product between the phase changed pilot symbols which is obtained from the inner product calculation means is a negative value.

According to the present invention as defined in claim 7, in the frame synchronization determination apparatus according to any of claims 4 to 6, a phase change means for performing 0 radian phase change is included in a plurality of the phase change means.

According to the present invention as defined in claim 8, in the frame synchronization determination apparatus according to any of claims 1 to 7, a symbol having the maximum amplitude is selected as the pilot symbol.

According to the present invention as defined in claim 9, there is provided a frame synchronization determination method for a communication system that transmits a signal frame into which a pilot symbol has been inserted from a transmitter to a receiver according to a multivalued QAM scheme, characterized in that one signal frame includes N symbols, n (n is a natural number greater than 2) pilot symbols are allocated in the one signal frame including N symbols such that at least one pair of pilot symbols is different from other pairs and that the phase difference between any pair of pilot symbols is not $\pi/2$ in a signal point arrangement, and the receiver comprises: calculating the inner product between input symbols; calculating the moving average of results of the inner product calculation and storing results of the moving average calculation every N cycle in N storage means; and comparing N values stored in the storage means so as to determine the position of the pilot symbol.

According to the present invention as defined in claim 10, there is provided a frame synchronization determination method for a communication system that transmits a signal frame into which a pilot symbol has been inserted from a transmitter to a receiver according to a multivalued QAM scheme, characterized in that one signal frame includes N symbols, n (n is a natural number greater than 2) pilot symbols are allocated in the one signal frame including N symbols such that at least one pair of pilot symbols is different from other pairs and that the phase difference between any pair of pilot symbols is not $\pi/2$ in a signal point arrangement, and the receiver comprises: calculating the inner product between input symbols; adding and averaging a plurality of results of the inner product calculation; calculating the moving average of results of the averaging and storing results of the moving average calculation in N storage means every N cycle; and comparing N values stored in the storage means so as to determine the position of the pilot symbol.

According to the present invention as defined in claim 11, in the frame synchronization determination method according to claim 9 or claim 10, the pilot symbols are selected such that the calculation result of the inner product between the pilot symbols is a negative value.

According to the present invention as defined in claim 12, there is provided a frame synchronization determination method for a communication system that transmits a signal frame into which a pilot symbol has been inserted from a transmitter to a receiver according to a multivalued QAM scheme, characterized in that one signal frame includes N symbols, n (n is a natural number greater than 2) pilot symbols are allocated in the one signal frame including N symbols such that at least one pair of pilot symbols is different from other pairs, and the receiver comprises: phase changing the input symbol; calculating the inner product between the phase changed symbols; calculating the moving average of results of the inner product calculation and storing results of the moving average calculation in N storage means every N cycle; and comparing N values stored in the storage means so as to determine the position of the pilot symbol.

According to the present invention as defined in claim 13, there is provided a frame synchronization determination method for a communication system that transmits a signal frame into which a pilot symbol has been inserted from a transmitter to a receiver according to a multivalued QAM scheme, characterized in that one signal frame includes N symbols, n (n is a natural number greater than 2) pilot symbols are allocated in the one signal frame including N symbols such that at least one pair of pilot symbols is different from other pairs, and the receiver comprises: phase changing the input symbol; calculating the inner product between the phase changed symbols; adding and averaging a plurality of results of the inner product calculation; calculating the moving average of results of the averaging and storing results of the moving average calculation in N storage means every N cycle; and comparing N values stored in the storage means so as to determine the position of the pilot symbol.

According to the present invention as defined in claim 14, in the frame synchronization determination method according to claim 12 or claim 13, characterized in that the pilot symbols are selected such that the calculation result of the inner product between the phase changed pilot symbols is a negative value.

According to the present invention as defined in claim 15, in the frame synchronization determination method according to any of claims 12 to 14, a phase change means for performing 0 radian phase change is included in a plurality of the phase change means.

According to the present invention as defined in claim 16, in the frame synchronization determination method according to any of claims 9 to 15, a symbol having the maximum amplitude is selected as the pilot symbol.

**Advantages of the Invention**

According to the present invention, by providing the inner product calculation means for calculating the inner product between symbols, it is possible to utilize a value having negative and positive symbol values for pilot symbol detection, although a value having an absolute value (square value) of the amplitude value of the pilot symbol has been used in a conventional approach, thus making detection criterion clearer.

The inner product calculation of random values such as noise or data symbol value results in positive and negative random values, and by calculating the moving average of the calculation results between symbols within one frame cycle, the value is converged to 0. On the other hand, the inner product calculation between the pilot symbols in one signal frame results in a predetermined value, which is not changed after calculation of moving average of the values in one frame cycle. By obtaining the inner product values and moving average thereof as described above, it is only necessary to determine whether the target value is 0 or not (predetermined value), which makes detection criterion clearer thereby reducing occurrence of false detection of the pilot symbol even if there is some influence of noise and the like, which facilitates frame synchronization.

Thus, according to the present invention, frame synchronization can be established even in a bad environment in which S/N is 0 dB, thereby improving BER characteristics, which results in an increase in reliability of a data communication system.

**Brief Description of the Drawings**

FIG. 1 is a view showing an arrangement of signal points of a 16 QAM;
FIG. 2 is a view showing an example of a configuration of one signal frame;
FIG. 3 is a view showing a signal point arrangement which is an embodiment of a frame synchronizing method according to the present invention;
FIG. 4 is a view showing a configuration of one signal frame which is an embodiment of a frame synchronizing method according to the present invention;
FIG. 5 is a block diagram showing a configuration of a pilot symbol detection circuit according to the present invention;
FIG. 6 is a view showing a configuration of one signal frame in which pilot symbols are not sequentially arranged;
FIG. 7 is a block diagram showing a configuration of a pilot symbol detection circuit in the case where pilot symbols are not sequentially arranged in one signal frame;
FIG. 8 is a view showing a signal point arrangement in a frame synchronizing method using three pilot symbols;

FIG. 9 is a view showing a configuration of one signal frame in a frame synchronizing method using three pilot symbols;

FIG. 10 is a block diagram showing a configuration of a pilot symbol detection circuit with averaging processing means according to the present invention;

FIG. 11 is a view showing a signal point arrangement which is an embodiment of a frame synchronizing method implemented by a pilot symbol detection circuit with averaging processing means;

FIG. 12 is a view showing a configuration of one signal frame which is an embodiment of a frame synchronizing method implemented by a pilot symbol detection circuit with averaging processing means;

FIG. 13 is a view showing a signal point arrangement according to another embodiment of the present invention;

FIG. 14 is a view showing a configuration of one signal frame according to another embodiment of the present invention;

FIG. 15 is a block diagram showing a configuration of a pilot symbol detection circuit according to another embodiment of the present invention;

FIG. 16 is a view showing a signal point arrangement according to still another embodiment of the present invention;

FIG. 17 is a view showing a configuration of one signal frame according to still another embodiment of the present invention; and

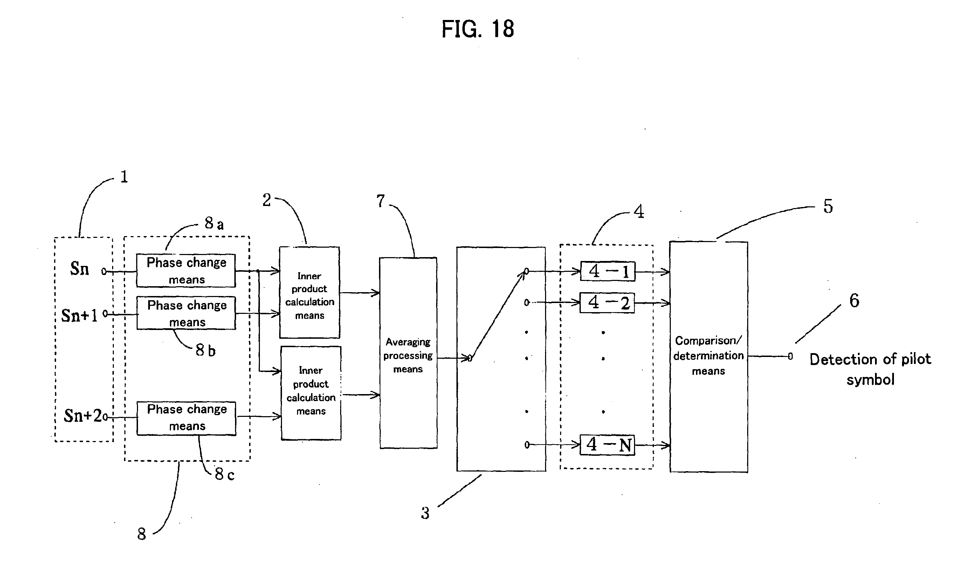

FIG. 18 is a block diagram showing a configuration of a pilot symbol detection circuit according to still another embodiment of the present invention.

**Explanation of Reference Symbols**

1: Input terminal
2: Inner product calculation means
3: Switch means
4: Moving average calculation/storage means
5: Comparison/determination means
6: Output terminal
7: Averaging processing means
8: Phase change means

**Best Mode for Carrying Out the Invention**

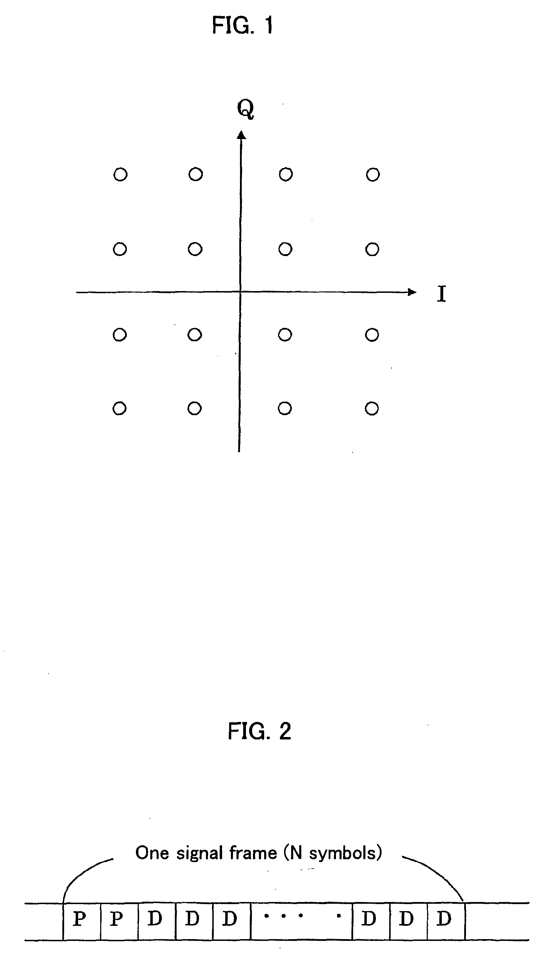

Now, embodiments of the present invention will be described using a 16 QAM as an example with reference to the accompanying drawings. The 16 QAM is a digital modulation scheme that modulates 4 bit digital data onto a carrier wave using 16 symbols for transmission. FIG. 1 is a view showing an arrangement of signal points of the 16 QAM. Data of 4 bits is allocated to each signal point. In the drawing, the horizontal axis represents an in-phase component I on the real axis and vertical axis represents an orthogonal component Q on the imaginary axis. Each signal point takes any of values -3, -1, 1, and 3.

In a communication system utilizing the QAM scheme, a pilot symbol is inserted into a signal frame, and the inserted pilot symbol is detected on the receiver side for frame synchronization. FIG. 2 is a view showing an example of a configuration of one signal frame. The one signal frame includes N symbols, and pilot symbols P are inserted at the beginning of the signal frame (before the data symbols D).

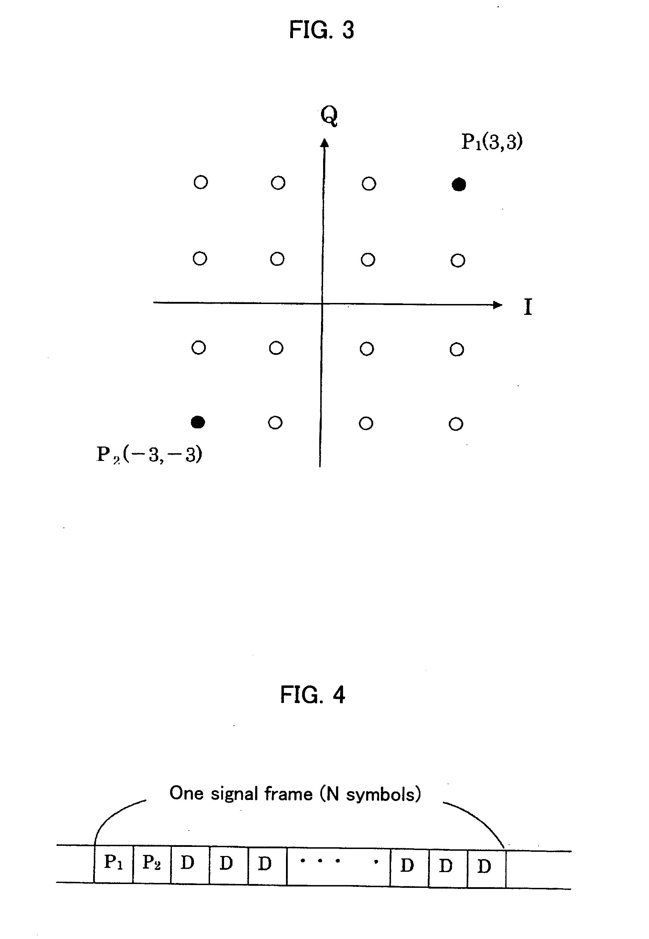

FIGS. 3 and 4 are views showing an embodiment of a frame synchronizing method according to the present invention. FIG. 3 is a view showing a signal point arrangement, and FIG. 4 is a view showing a configuration of one signal frame. Two pilot symbols $P_1$ (3, 3) and $P_2$ (-3, -3) are inserted at the beginning of one signal frame. Since it is ideal to allocate a symbol value for maximizing an amplitude in order to facilitate determination of the pilot symbols, such symbols $P_1$ and $P_2$ are selected in the present embodiment. However, it is not always necessary to allocate such a pilot symbol in the present invention. Further, in the present embodiment, two pilot symbols are selected such that the phase difference between them does not become $\pi/2$ radian. A case where the pilot symbols are selected such that the phase difference between them becomes $\pi/2$ radian will be described later.

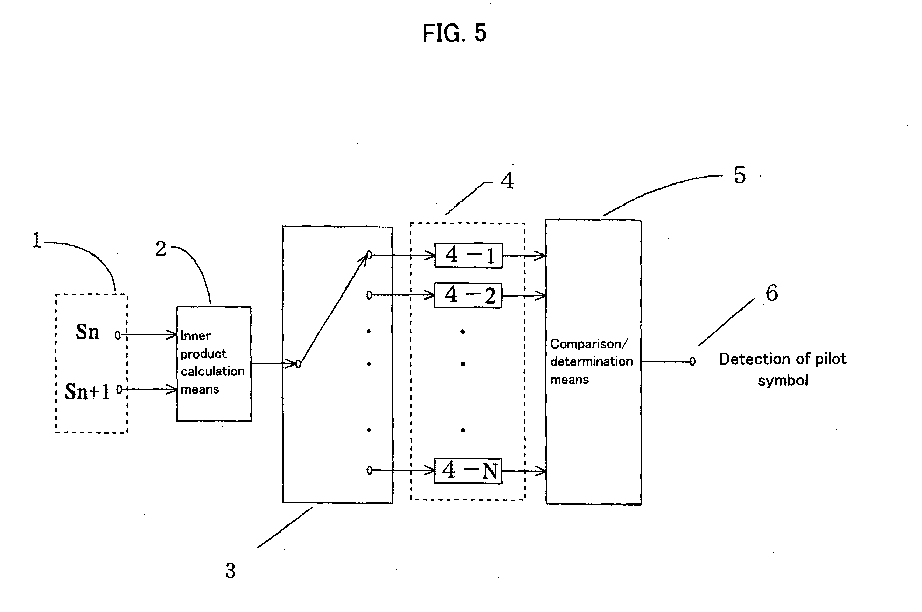

FIG. 5 is a block diagram showing a configuration of a pilot symbol detection circuit according to the present invention. A reference numeral 1 denotes an input terminal, 2 denotes an inner product calculation means, 3 denotes a switch means, 4 denotes a moving average calculation/storage means, 5 denotes a comparison/determination means, and 6 denotes an output means.

Two input terminals 1 are provided in the pilot symbol detection circuit, and n-th symbol Sn and (n+1)-th symbol Sn+1 are input respectively to the input terminals 1. The inner product calculation means 2 executes the inner product calculation of the input two symbols. The switch means 3 sequentially switches N output terminals. The switching is made every time the inner product calculation of two symbols (Sn and Sn+1) is executed, and the switching means 3 is returned back to the first output terminal every N cycle. The moving average calculation/storage means 4 includes N storage means 4-1, 4-2, ···, 4-N. The moving average calculation/storage means 4 calculates the average of output data from the respective output terminals of the switch means 3 and data that have already been stored in the respective storage means. The calculated average values are stored again in the respective storage means. That is, the data in the respective storage means are updated every N cycle. In the initial state, 0 is set in the respective storage means 4-1, 4-2, ···, 4-N. The comparison/determination means 5 compares values stored in N storage means 4-1, 4-2, ···, 4-N of the moving average calculation/storage means 4 so as to detect the pilot symbol. A detection result of the pilot symbol is output from the output terminal 6.

How to detect the pilot symbol with the above configuration will concretely be described below. When n-th symbol Sn and (n+1)-th symbol Sn+1 are subjected to the inner product calculation by the inner product calculation means 2, any of the following inner product values: -18, -12, -10, -8, -6, -4, -2, 0, +2, +4, +6, +8, +10, +12, and +18 can be obtained. However, the data symbols are random, so that in the case where both the symbols Sn and Sn+1 are data symbols, positive and negative random values are obtained as the inner product values, with the result that the moving average of the inner product values thereof is converged to 0. In the case where one of the symbols Sn and Sn+1 is the pilot symbol, inner product value assumes any of the following values: -18, -12, -6, 0, +6, +12, and +18 and, also in this case, the moving average of the inner product values is converged to 0. In the case where both the symbols Sn and Sn+1 are pilot symbols, the inner product value to be calculated necessarily becomes -18 and, accordingly, the moving average thereof becomes -18. Therefore, -18 is stored in one of the storage means 4-1, 4-2, ⋯, 4-N to each of which the moving average of the inner product calculation results is stored, and values near 0 are stored in other N-1 storage means. The comparison determination means 5 searches the storage means 4-1, 4-2, ⋯, 4-N of the moving average calculation/storage means 4 for -18 so as to detect the pilot symbol. Although it is ideal to select the pilot symbol such that the inner product of the pilot symbols becomes a negative value as in the case of the present embodiment, this is not essential.

The above example is a case where there is no influence of noise or phasing. Even if there is some influence of noise or phasing, these influences are also random, so that the moving average of the inner product values between the data symbols and moving average between the data symbol and pilot symbol are converged to 0 in the result. Although the inner product value between the pilot symbols may also be influenced by noise or phasing, the moving average between the pilot symbols is distinctly different from 0, which is the moving average of the inner product values between the data symbols or moving average of the inner products between the data symbol and pilot symbol, making detection process of the comparison/determination means significantly easier than ever before. This significantly reduces the probability of occurrence of false detection of the pilot symbol. As described above, according to the present invention, the pilot symbol can reliably be detected even under an environment in which there is noise or phasing, thus facilitating frame synchronization.

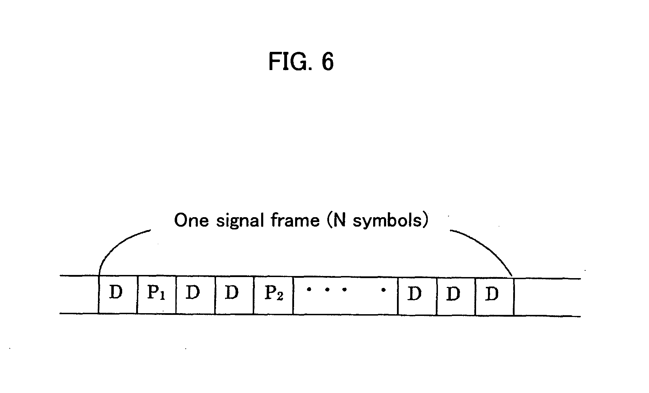

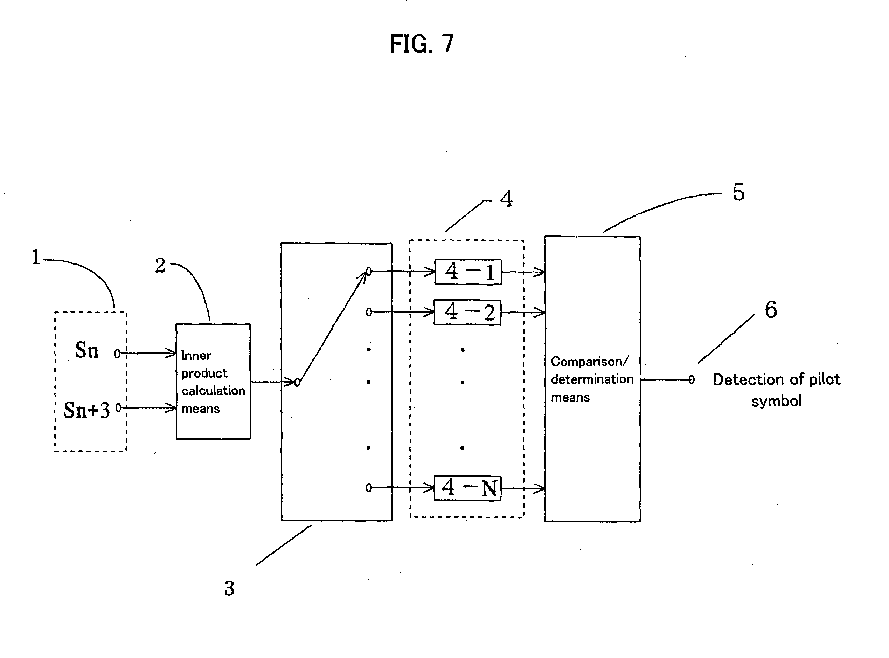

The pilot symbols in one signal frame need not sequentially be arranged at the beginning of the signal frame as shown in the present embodiment, but may be separately arranged in one signal frame. FIG. 6 shows such arrangement, in which pilot symbols $P_1$ and $P_2$ are

inserted into second and fifth symbol positions. In this case, n-th symbol Sn and (n+3)-th symbol Sn+3 are input to the inner product calculation means 2, as shown in FIG. 7.

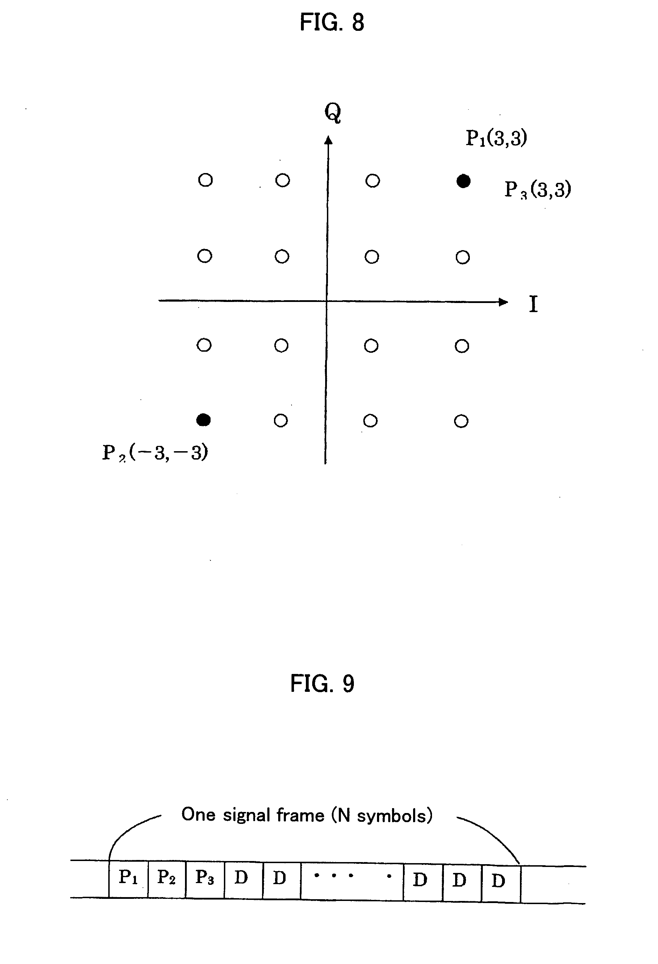

Further, the number of the pilot symbols to be inserted into one signal frame is not limited to two, but three or more pilot symbols may be inserted. FIGS. 8 and 9 are views showing an embodiment of the frame synchronization method using three pilot symbols. FIG. 8 is a view showing a signal point arrangement, and FIG. 9 is a view showing a configuration of one signal frame in the case where three pilot symbols are used. In this embodiment, a pilot symbol $P_3$ (3,3) is used in addition to the pilot symbols $P_1$ (3, 3) and $P_2$ (-3, -3) used in the above embodiment. These three pilot symbols are inserted into first to third symbol positions from the beginning of the one signal frame. In the present embodiment, the pilot symbol detection circuit shown in FIG. 5 can be used.

As in the case of the above embodiment, in the case where both the symbols Sn and Sn+1 are data symbols or where one of the symbols Sn and Sn+1 is the pilot symbol, the moving average of the inner product values thereof is converged to 0; and in the case where both the symbols Sn and Sn+1 are pilot symbols, the inner product value to be calculated necessarily becomes -18 and, accordingly, the moving average thereof becomes -18. However, in the present embodiment, -18 is stored in two storage means of the moving average calculation/storage means 4. Thus, it is only necessary for the comparison/determination means 5 to search the storage means 4-1, 4-2, ⋯, 4-N of the moving average calculation/storage means 4 for two values near -18, thus allowing the pilot symbol to be detected more reliably.

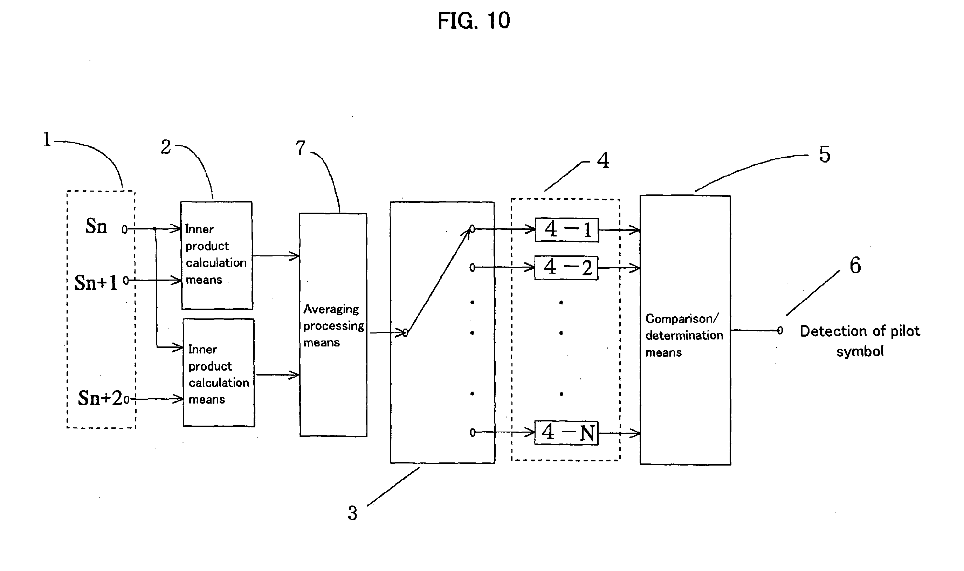

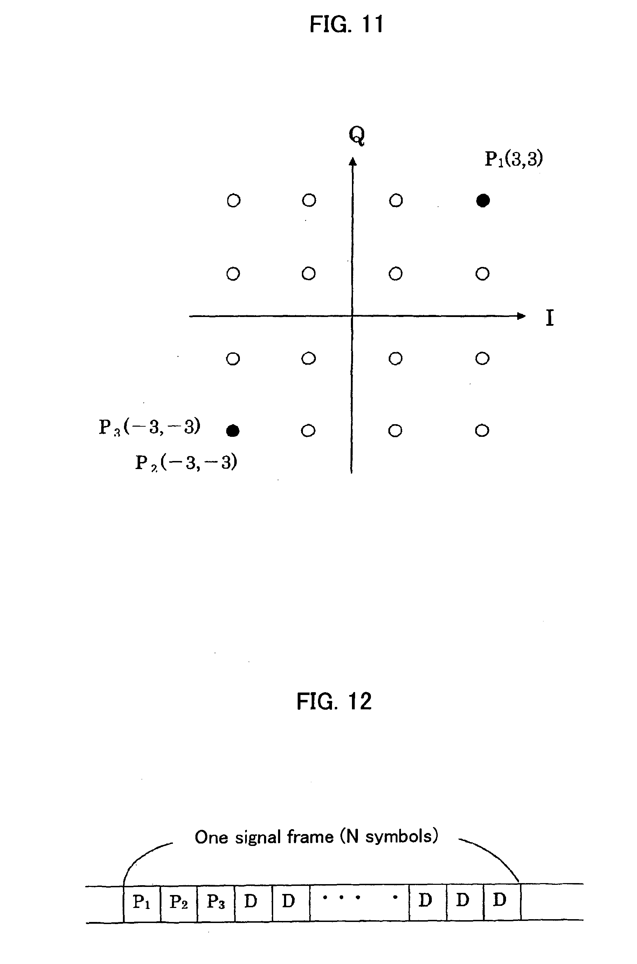

FIG. 10 is an another embodiment of the present invention, which shows a block diagram of a pilot symbol detection circuit in which an averaging processing means 7 is newly added as compared to the pilot symbol detection circuit of FIG. 5. The functions of the inner product calculation means 2, switch means 3, moving average calculation/storage means 4, and comparison/determination means 5 are the same as those shown in FIG. 5. In this example, three symbols Sn, Sn+1, and Sn+2 are input to the circuit. The averaging processing means 7 performs averaging processing of the inner product value calculated between Sn and Sn+1 and inner product value calculated between Sn and Sn+2. FIGS. 11 and 12 are views showing a signal point arrangement and a configuration of one signal frame in the case where the above pilot symbol detection circuit is used. In this case, three pilot symbols $P_1$ (3, 3), $P_2$ (-3, -3), and $P_3$ (-3, -3) are used.

In the case where all the input from the input terminals Sn, Sn+1, and Sn+2 are pilot symbols in the symbol detection circuit including the averaging processing means 7, the value that has been subjected to averaging processing becomes -36. That is, deviation of the value from 0 is larger as compared to the above embodiment in which two pilot symbols are used, thus making it easier to determine the detection of the pilot symbol.

Now, the advantage of using three pilot symbols for the pilot symbol detection will be described. The reason for using three pilot symbols to take the averages of the inner product values of two pilot symbol pairs is to reduce the probability that there exists a combination of data symbols having the same symbol values as those of the pilot symbols in one frame for reducing the possibility of occurrence of frame misssynchronization. The probability that the result of the inner product between the data symbols becomes maximum is $(1/16)^2$, so that when i inner product calculations are used in one signal frame, the probability $r_{max}$ that the result of the inner product calculation between the data symbols exhibits the maximum value can be represented as follows:

[Numeral 1]

$$r_{max} = \frac{1}{2}\left(\frac{1}{k}\right)^{2i}$$

"k" is the multiple number of multivalued QAM and, in 16 QAM, k = 16. In the present embodiment, r = $7.6939453125 \times 10^{-6}$. "1/2" in this expression represents the possibility that the inner product calculations between the data symbols (other than the inner product calculations between the pilot symbols) become the same level, that is, the probability of whether pilot symbol position or data symbol position will be selected. It is said, in general, when the value of r exceeds $10^{-4}$, satisfactory communication quality can be obtained. Thus, in this case, satisfactory characteristics can be obtained as a communication system.

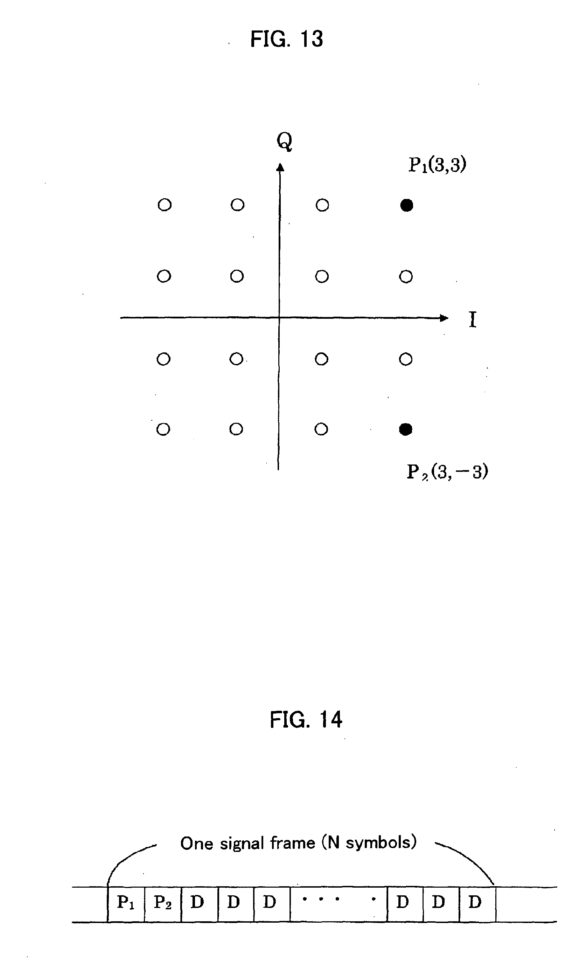

In the embodiments described above, two or more pilot symbols are selected such that the phase difference between any combination of two pilot symbols does not become $\pi/2$. This is because the inner product calculation between two symbols phase difference of which is $\pi/2$ results in 0. However, the present invention is also applicable to a case where two pilot symbols phase difference of which is $\pi/2$ are selected. FIGS. 13 and 14 show another embodiment of the present invention, FIG. 13 being a view showing a signal point arrangement and FIG. 14 a configuration of one signal frame.

In the present embodiment, two pilot symbols $P_1$ (3,3) and $P_2$ (3, -3) are inserted at the beginning of one signal frame. The phase difference between the two pilot symbols $P_1$ and $P_2$ is $\pi/2$ radian.

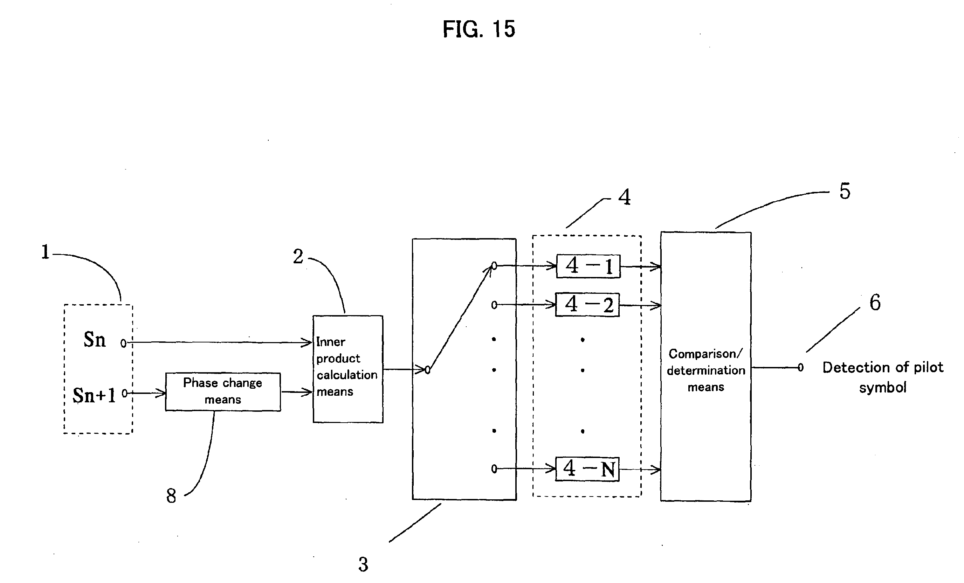

FIG. 15 is a block diagram showing a configuration of a pilot symbol detection circuit according to the present embodiment. As compared to the pilot symbol detection circuit shown in FIG. 5, a pilot symbol detection circuit of FIG. 15 additionally includes a phase change means 8 in the rear stage of the Sn+1 input terminal. The functions of the inner product calculation means 2, switch means 3, moving average calculation/storage means 4, and comparison/determination means 5 are the same as those shown in FIG. 5. In this circuit, among two symbols, Sn and Sn+1, which are input into the circuit, the phase of the symbol input to the Sn+1 side is advanced by $\pi/2$ by the phase change means 8. Thus, when $P_1$ (3, 3) and $P_2$ (3, -3) are input as the symbols Sn and Sn+1, respectively, the latter symbol $P_2$ is changed to $P'_2$ (-3, -3) by the phase change means 8, followed by calculation of the inner product between the two symbols, with the result that -18 is obtained as the calculation result. As described above, the inner product value between the pilot symbols phase difference of which is $\pi/2$ does not become 0 but becomes -18 as in the case of the above embodiments. In the case where both the symbols Sn and Sn+1 input to the pilot symbol detection circuit are data symbols, the symbol input to the Sn+1 side is phase-changed by the phase change means 8. However, since the data symbols are random, the moving average of the inner product values between the symbols Sn and Sn+1 calculated by the inner product calculation means 2 is converged to 0 in the result. Therefore, even in the configuration including the phase change means 8, -18 is stored in one of the storage means 4-1, 4 -2 , ⋯ , 4-N to each of which the moving average of the inner product calculation results is stored, and values near 0 are stored in other N-1 storage means. The comparison determination means 5 searches the storage means 4-1, 4-2, ⋯, 4-N of the moving average calculation/storage means 4 for -18 so as to detect the pilot symbol, thereby achieving frame synchronization at the receiver. Although it is ideal to select the pilot symbol such that the calculation result of the inner product calculation means 2 obtained when the pilot symbol is input becomes a negative value, this is not essential.

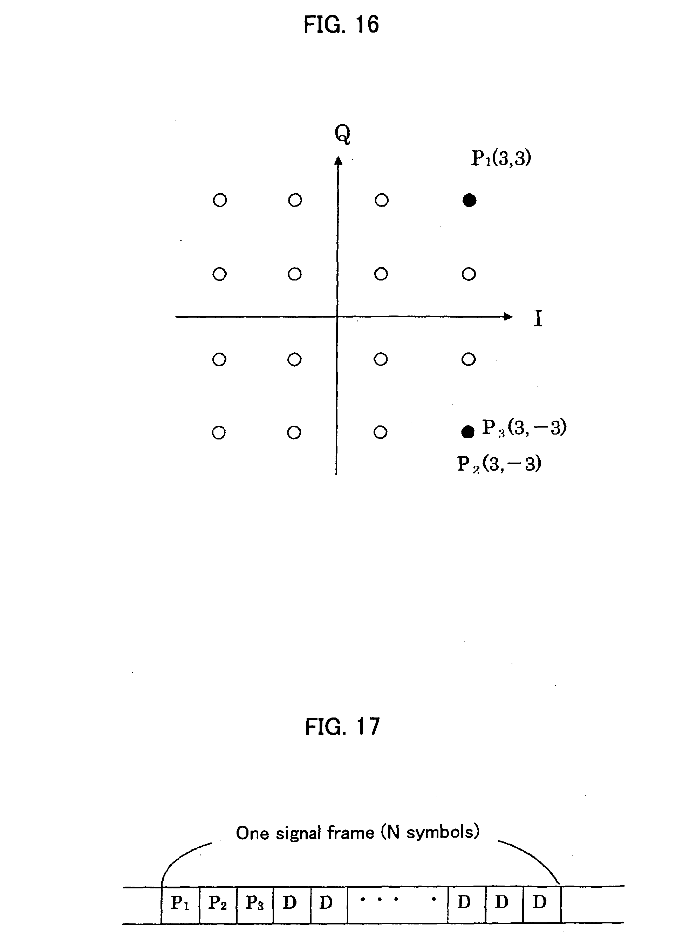

There is available a pilot detection circuit including both the averaging processing means 7 and phase change means 8 as another embodiment of the present invention. FIGS. 16 and 17 show another embodiment of the present invention, FIG. 16 being a view showing a signal point arrangement, and FIG. 17 a configuration of one signal frame. In this embodiment, a pilot symbol $P_1$ (3,3) and common pilot symbols $P_2$ (3, -3) and $P_3$ (3, -3) are used. As shown in FIG. 16, both the phase difference between the symbols $P_1$ and $P_2$ and phase difference between the symbols $P_1$ and $P_3$ are $\pi/2$ radian. Then, phase change is applied by the phase change means 8 so as to change these phase differences to $\pi$ radian. Specifically, a phase change means 8a is used to apply 0 radian phase change and phase change means 8b and 8c are used to apply $\pi/2$ radian phase change in the clockwise direction. The 0-radian phase change corresponds to no phase change at all, so that the phase change means 8a can be omitted. Whether the phase change means 8a is provided for 0 radian phase change or the phase change means 8a is not provided can be determined on a case-by-case basis. In the block diagram of the pilot symbol detection circuit shown in FIG. 15, the phase change means for 0 radian phase change is not provided.

When the phase change is applied in the same manner as described above, symbol values $P_2$ (3, -3) and $P_3$ (3, -3) of the pilot symbols $P_2$ and $P_3$ are changed to $P'_2$ (-3, -3) and $P'_3$ (-3, -3). That is, the pilot symbols $P_1$, $P_2$, and $P_3$ are input respectively to Sn, Sn+1, and Sn+2 and then subj ected to phase change and inner product calculation, followed by averaging processing, whereby -36 is obtained. This value is used for detection of the pilot symbol, as described in the above embodiments. Although it is ideal to select the pilot symbol such that the calculation result of the inner product calculation means 2 obtained when the pilot symbol is input becomes a negative value, this is not essential.

**Industrial applicability**

According to the frame synchronizer and frame synchronizing method, by providing the inner product means for calculating the inner product between symbols, it is possible to utilize a value having negative and positive values for pilot symbol detection, making detection criterion clearer.

The inner product calculation of random values such as noise or data symbol value results in positive and negative random values, and by calculating the moving average of the calculation results between symbols within one frame cycle, the value is converged to 0. On the other hand, the inner product calculation between the pilot symbols in one signal frame results in a predetermined value, which is not changed after calculation of moving average of the values in one frame. By obtaining the inner product values and moving average thereof as described above, it is only necessary to determine whether the target value is 0 or not (predetermined value), which makes detection criterion clearer, thereby reducing occurrence of false detection of the pilot symbol even if there is some influence of noise and the like, which facilitates frame synchronization.

As a result, occurrence of false detection of the pilot symbol can be reduced even if there is some influence of noise and the like, which facilitates frame synchronization.

The frame synchronizer and frame synchronizing method according to the present invention can be applied to a recently widely used communication system that utilizes a multivalued QAM (Quadrate Amplitude Modulation) scheme, so that the industrial applicability thereof is very high.

**Claims**

1. A frame synchronization determination apparatus for a communication system that transmits a signal frame into which a pilot symbol has been inserted from a transmitter to a receiver according to a multivalued QAM scheme, **characterized in that** one signal frame includes N symbols, n (n is a natural number greater than 2) pilot symbols are allocated in the one signal frame including N symbols such that at least one pair of n pilot symbols is different from other pairs and that the phase difference between any pair of n pilot symbols is not $\pi/2$ in a signal point arrangement, and the receiver comprises:

   inner product calculation means for calculating the inner product between input symbols;
   moving average calculation/storage means for calculating and storing the moving average of calculation results obtained from the inner product calculation means;
   N storage means provided in the moving average calculation/storage means; and
   comparison/determination means for comparing N values stored in the storage means so as to determine the position of the pilot symbol.

2. A frame synchronization determination apparatus for a communication system that transmits a signal frame into which a pilot symbol has been inserted from a transmitter to a receiver according to a multivalued QAM scheme, **characterized in that** one signal frame includes N symbols, n (n is a natural number greater than 2) pilot symbols are allocated in the one signal frame including N symbols such that at least one pair of n pilot symbols is different from other pairs and that the phase difference between any pair of n pilot symbols is not $\pi/2$ in a signal point arrangement, and the receiver comprises:

   a plurality of inner product calculation means for calculating the inner product between input symbols;
   averaging processing means for adding and averaging a plurality of calculation results obtained from the plurality of inner product calculation means;
   moving average calculation/storage means for calculating and storing the moving average of results obtained from the averaging processing means;
   N storage means provided in the moving average calculation/storage means; and
   comparison/determination means for comparing N values stored in the storage means so as to determine the position of the pilot symbol.

3. The frame synchronization determination apparatus according to claim 1 or 2, **characterized in that** the pilot symbols are selected such that the calculation result of the inner product between the pilot symbols which is obtained from the inner product calculation means is a negative value.

4. A frame synchronization determination apparatus for a communication system that transmits a signal frame into which a pilot symbol has been inserted from a transmitter to a receiver according to a multivalued QAM scheme, **characterized in that**
one signal frame includes N symbols,
n (n is a natural number greater than 2) pilot symbols are allocated in the one signal frame including N symbols such that at least one pair of n pilot symbols is different from other pairs, and
the receiver comprises:

> phase change means for phase changing the input symbol;
> inner product calculation means for calculating the inner product between the phase changed symbols;
> moving average calculation/storage means for calculating and storing the moving average of calculation results obtained from the inner product calculation means;
> N storage means provided in the moving average calculation/storage means; and
> comparison/determination means for comparing N values stored in the storage means so as to determine the position of the pilot symbol.

5. A frame synchronization determination apparatus for a communication system that transmits a signal frame into which a pilot symbol has been inserted from a transmitter to a receiver according to a multivalued QAM scheme, **characterized in that**
one signal frame includes N symbols,
n (n is a natural number greater than 2) pilot symbols are allocated in the one signal frame including N symbols such that at least one pair of n pilot symbols is different from other pairs, and
the receiver comprises:

> phase change means for phase changing the input symbol;
> a plurality of inner product calculation means for calculating the inner product between the phase changed symbols;
> averaging processing means for adding and averaging a plurality of calculation results obtained from the plurality of inner product calculation means;
> moving average calculation/storage means for calculating and storing the moving average of results obtained from the averaging processing means;
> N storage means provided in the moving average calculation/storage means; and
> comparison/determination means for comparing N values stored in the storage means so as to determine the position of the pilot symbol.

6. The frame synchronization determination apparatus according to claim 4 or 5, **characterized in that**
the pilot symbols are selected such that the calculation result of the inner product between the phase changed pilot symbols which is obtained from the inner product calculation means is a negative value.

7. The frame synchronization determination apparatus according to any of claims 4 to 6, **characterized in that**
phase change means for performing 0 radian phase change is included in a plurality of the phase change means.

8. The frame synchronization determination apparatus according to any of claims 1 to 7, **characterized in that**
a symbol having the maximum amplitude is selected as the pilot symbol.

9. A frame synchronization determination method for a communication system that transmits a signal frame into which a pilot symbol has been inserted from a transmitter to a receiver according to a multivalued QAM scheme, **characterized in that**
one signal frame includes N symbols,
n (n is a natural number greater than 2) pilot symbols are allocated in the one signal frame including N symbols such that at least one pair of n pilot symbols is different from other pairs and that the phase difference between any pair of n pilot symbols is not $\pi/2$ in a signal point arrangement, and
the receiver comprises:

> calculating the inner product between input symbols;
> calculating the moving average of results of the inner product calculation and storing results of the moving average calculation every N cycle in N storage means; and
> comparing N values stored in the storage means so as to determine the position of the pilot symbol.

10. A frame synchronization determination method for a communication system that transmits a signal frame into which a pilot symbol has been inserted from a transmitter to a receiver according to a multivalued QAM scheme, **characterized in that**
one signal frame includes N symbols,
n (n is a natural number greater than 2) pilot symbols are allocated in the one signal frame including N symbols such that at least one pair of n pilot symbols is different from other pairs and that the phase difference between any pair of n pilot symbols is not $\pi/2$

in a signal point arrangement, and
the receiver comprises:

> calculating the inner product between input symbols;
> adding and averaging a plurality of results of the inner product calculation;
> calculating the moving average of results of the averaging and storing results of the moving average calculation in N storage means every N cycle; and
> comparing N values stored in the storage means so as to determine the position of the pilot symbol.

11. The frame synchronization determination method according to claim 9 or 10, **characterized in that** the pilot symbols are selected such that the calculation result of the inner product between the pilot symbols is a negative value.

12. A frame synchronization determination method for a communication system that transmits a signal frame into which a pilot symbol has been inserted from a transmitter to a receiver according to a multivalued QAM scheme, **characterized in that** one signal frame includes N symbols, n (n is a natural number greater than 2) pilot symbols are allocated in the one signal frame including N symbols such that at least one pair of n pilot symbols is different from other pairs, and the receiver comprises:

> phase changing the input symbol;
> calculating the inner product between the phase changed symbols;
> calculating the moving average of results of the inner product calculation and storing results of the moving average calculation in N storage means every N cycle; and
> comparing N values stored in the storage means so as to determine the position of the pilot symbol.

13. A frame synchronization determination method for a communication system that transmits a signal frame into which a pilot symbol has been inserted from a transmitter to a receiver according to a multivalued QAM scheme, **characterized in that** one signal frame includes N symbols, n (n is a natural number greater than 2) pilot symbols are allocated in the one signal frame including N symbols such that at least one pair of n pilot symbols is different from other pairs, and the receiver comprises:

> phase changing the input symbol;
> calculating the inner product between the phase changed symbols;
adding and averaging a plurality of results of the inner product calculation;
calculating the moving average of results of the averaging and storing results of the moving average calculation in N storage means every N cycle; and
comparing N values stored in the storage means so as to determine the position of the pilot symbol.

14. The frame synchronization determination method according to claim 12 or 13, **characterized in that** the pilot symbols are selected such that the calculation result of the inner product between the phase changed pilot symbols is a negative value.

15. The frame synchronization determination method according to any of claims 12 to 14, **characterized in that** phase change means for performing 0 radian phase change is included in a plurality of the phase change means.

16. The frame synchronization determination method according to any of claims 9 to 15, **characterized in that** a symbol having the maximum amplitude is selected as the pilot symbol.

## FIG. 1

## FIG. 2

One signal frame (N symbols)

# FIG. 3

# FIG. 4

One signal frame (N symbols)

FIG. 5

FIG. 6

One signal frame (N symbols)

| D | P₁ | D | D | P₂ | · · ·     · | D | D | D |

# FIG. 7

# FIG. 8

# FIG. 9

One signal frame (N symbols)

| P₁ | P₂ | P₃ | D | D | · · · · | D | D | D |

FIG. 10

EP 1 898 583 A1

## FIG. 11

## FIG. 12

One signal frame (N symbols)

| P₁ | P₂ | P₃ | D | D | · · · · | D | D | D |

## FIG. 13

## FIG. 14

One signal frame (N symbols)

| P₁ | P₂ | D | D | D | · · · · | D | D | D |

FIG. 15

EP 1 898 583 A1

## FIG. 16

## FIG. 17

One signal frame (N symbols)

| P₁ | P₂ | P₃ | D | D | · · · · | D | D | D |

FIG. 18

## INTERNATIONAL SEARCH REPORT

International application No.

PCT/JP2005/018695

A. CLASSIFICATION OF SUBJECT MATTER
*H04L27/38*(2006.01)

According to International Patent Classification (IPC) or to both national classification and IPC

B. FIELDS SEARCHED

Minimum documentation searched (classification system followed by classification symbols)
*H04L27/38*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-49881 A (Kokusai Electric Co., Ltd.),<br>18 February, 2000 (18.02.00),<br>Full text; all drawings<br>(Family: none) | 1-3,9-11<br>4-8,12-16 |
| Y | JP 63-142922 A (Fujitsu Ltd.),<br>15 June, 1988 (15.06.88),<br>Claims; Fig. 1<br>(Family: none) | 4-8,12-16 |
| Y | JP 4-70149 A (Yamaha Corp.),<br>05 March, 1992 (05.03.92),<br>Claims<br>(Family: none) | 4-8,12-16 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 November, 2005 (24.11.05) | Date of mailing of the international search report<br>06 December, 2005 (06.12.05) |
|---|---|
| Name and mailing address of the ISA/<br>Japanese Patent Office | Authorized officer |
| Facsimile No. | Telephone No. |

Form PCT/ISA/210 (second sheet) (April 2005)

EP 1 898 583 A1

**INTERNATIONAL SEARCH REPORT**

International application No.

PCT/JP2005/018695

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2002-261853 A  (Ricoh Co., Ltd.),<br>13 September, 2002 (13.09.02),<br>Claims 1, 4<br>(Family: none) | 1-16 |
| A | JP 2005-506796 A  (D.S.P.C. Technologies Ltd.),<br>03 March, 2005 (03.03.05),<br>Full text; all drawings<br>& WO 2003/036812 A1    & US 2003/0081633 A1<br>& EP 1440522 A | 1-16 |

Form PCT/ISA/210 (continuation of second sheet) (April 2005)

**EP 1 898 583 A1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9083505 A

- JP 2000049881 A